# EUROPEAN PATENT APPLICATION

(11) **EP 4 793 147 A1**
(43) Date of publication of application: **19.08.2026**
(21) Application number: 26158533.5
(22) Date of filing: 13.02.2026
(51) Int. Cl.: B62D 35/00

(54) **MOTOR VEHICLE**

(30) Priority: 14.02.2025 IT 202500002829
(71) Applicant: FERRARI S.p.A., 41100 Modena (IT)
(72) Inventor: SEDDA, Salvatore, 41100 MODENA (IT); ANGIUS, Pierandrea, 41100 MODENA (IT); LOPES FURTADO, Jason, 41100 MODENA (IT); MANZONI, Flavio, 41100 MODENA (IT); PALAZZANI, Carlo, 41100 MODENA (IT)
(74) Representative: Studio Torta S.p.A.

(57) **Abstract**

A motor vehicle (1; 1') is described that comprises a front end (31) and a rear end (32) that are opposite to each other according to an advancement direction (A) and a body (2). The body (2) comprises, in turn, a floor panel (3) and a pair of shell portions (4) coupled to the floor panel (3) and spaced apart from each other along a first axis (Y) of the motor vehicle (1; 1'). The shell portions (4) define respective compartments (5) with the floor panel (3), at least one of which is a cabin configured to accommodate a user of the motor vehicle (1; 1'). The body (2) further comprises an aerodynamic duct (30) extending between the shell portions (4) along the first axis (Y) and between the front end (31) and the rear end (32) along a second roll axis (X) of the motor vehicle (1; 1'); and at least one downforce wing (40, 41, 15, 42) that is arranged within the aerodynamic duct (30) and/or defining the aerodynamic duct (30).

## Description

### CROSS-REFERENCE TO RELATED APPLICATIONS

This patent application claims priority from Italian patent application no. 102025000002829 filed on February 14, 2025, the entire disclosure of which is incorporated herein by reference.

### TECHNICAL FIELD

This invention relates to a motor vehicle.

### PRIOR ART

Motor vehicles generally comprise:
- a chassis;
- a plurality of wheels rotatable in relation to the chassis; and
- a bodywork, which covers the chassis and/or is integrated into the chassis and which defines the outermost region of the motor vehicles.

Considering an advancement direction, the motor vehicles also comprise:
- a front end and a rear end, which are opposed to each other along that advancement direction;
- a bottom, which is adapted to face the ground on which the wheels rest; and
- a top, which faces away from the bottom along a direction vertical to the ground.

In a known way, during forward motion, motor vehicles are hit by a flow of air.

In particular, when the airflow impacts against the front end of the motor vehicles, it essentially divides into two flows: a first flow, which flows along the top of the car body, and a second flow, which flows along the bottom. The first flow and the second flow subsequently rejoin downstream of the rear end of the motor vehicles.

In an equally well-known way, the geometry of the bodywork has a significant influence on the distribution of the airflow between the first and second flow and, therefore, has important consequences in terms of the aerodynamic performance of the car, and thus in terms of high-speed stability and road-holding.

In general, there is a need in the industry to produce solutions that are innovative compared to the usual standards, in particular to improve the overall aerodynamic performance of motor vehicles. Specifically, there is a need to improve the aerodynamic efficiency of motor vehicles. More specifically, there is a need to increase the vertical load acting on motor vehicles.

One purpose of the invention is that of meeting the above need.

### DESCRIPTION OF THE INVENTION

The purpose is achieved with a motor vehicle as defined in claim 1.

The dependent claims define particular embodiments of the invention.

In particular, the purpose is achieved with a motor vehicle comprising:
- a front end and a rear end that are opposite each other according to an advancement direction of said motor vehicle; and
- a body;

said body comprising, in turn:
   - a floor panel;
   - a pair of shell portions coupled to said floor panel and spaced apart from each other along a first pitch axis of said motor vehicle;
said shell portions defining respective compartments with said floor panel;
wherein at least one of said compartments is a cabin configured to accommodate, in use, a user of said motor vehicle;
said body further comprising:
- an aerodynamic duct extending between said shell portions along said first axis and between said front end and said rear end along a second roll axis of said motor vehicle; and
- at least one downforce wing that is arranged within said aerodynamic duct and/or delimiting said aerodynamic duct.

According to one aspect of the invention, the motor vehicle also comprises:
- a first said downforce wing, which is closer to said front end than to said rear end along said second axis; and
- a second said downforce wing, which is integrated into said floor panel.

According to another aspect of the invention, said body comprises a bridge element extending between said shell portions along said first axis, so as to structurally connect said shell portions to each other, and configured to establish visual and/or fluidic communication between said compartments;
said aerodynamic duct comprising a first portion, which extends between said bridge element and said floor panel along a third axis that is vertical to the ground on which said motor vehicle rests, in use.

According to another aspect of the invention, said aerodynamic duct also comprises a first opening at said front end;
said first downforce wing being at least in part interposed between said first opening and said first portion along said second axis.

According to another aspect of the invention, said aerodynamic duct also comprises a second opening at said floor panel; said second opening being adapted to face, in use, towards the ground on which said motor vehicle rests;
said second opening being arranged downstream of said first opening along said second axis considering the direction oriented from said front end to said rear end;
said first portion extending downstream of said second opening along said second axis in the direction oriented from said front end to said rear end.

According to another aspect of the invention, said aerodynamic duct also comprises a second portion extending downstream of said first portion along said second axis considering the direction oriented from said front end to said rear end;
wherein said second portion directly faces towards the exterior of said motor vehicle.

According to another aspect of the invention, said motor vehicle also comprises another bridge element extending between said shell portions along said first axis; said additional bridge element being closer to said rear end than to said front end along said second axis;
said aerodynamic duct comprising a third portion, which extends between said additional bridge element and said floor panel along said third axis.

According to another aspect of the invention, said motor vehicle also comprises a third said downforce wing, which is arranged at said third portion.

According to another aspect of the invention, said aerodynamic duct also comprises a third opening at said rear end;
wherein said third portion extends to said third opening.

According to another aspect of the invention, proceeding from said front end to said rear end along said second axis, the extension of the cross section of said aerodynamic duct orthogonally to said second axis follows a converging-diverging or essentially converging trend.

### BRIEF DESCRIPTION OF THE DRAWINGS

Below, two embodiments of the invention are described to better understand the same by way of non-limiting examples and with reference to the attached drawings in which:
- Figure 1 is a perspective view of a motor vehicle according to a first embodiment of this invention;
- Figure 2 is an additional perspective view of the motor vehicle in Figure 1;
- Figure 3 is a cross section of the motor vehicle according to a longitudinal cross-section plane, with parts schematically depicted;
- Figure 4 is a cross section of the motor vehicle according to the above-mentioned longitudinal plane, with parts schematically depicted;
- Figure 5 is a plan view of the motor vehicle, illustrating a propulsion assembly;
- Figure 6 is a cross section of the motor vehicle, on an enlarged scale, according to a vertical cross-section plane;
- Figure 7 is another, schematic cross section according to the longitudinal plane of the motor vehicle, with parts removed for clarity; and
- Figure 8 is a plan diagram of a motor vehicle according to a second embodiment of this invention, illustrating a propulsion assembly.

### EMBODIMENTS OF THE INVENTION

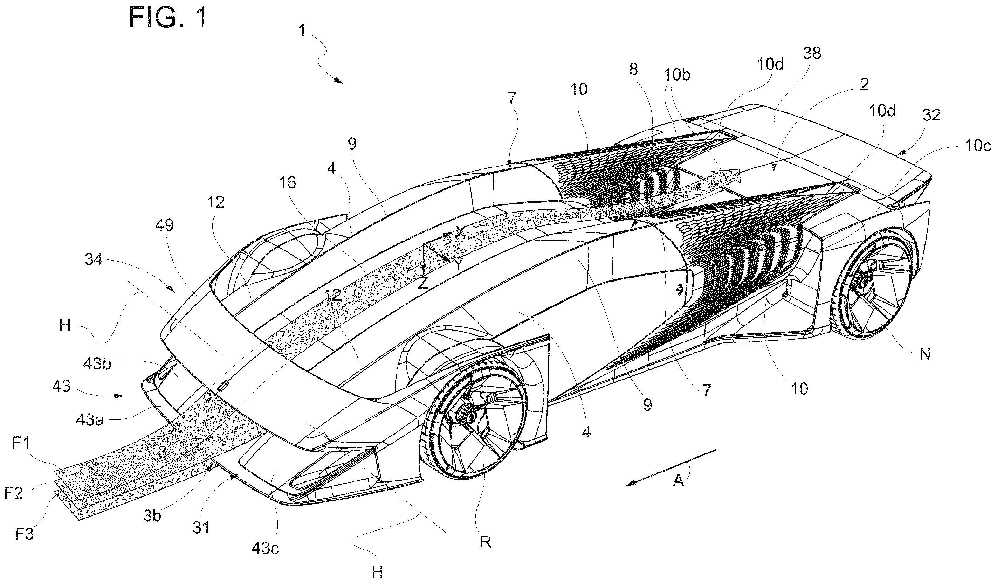

In Figure 1, reference number 1 is used to indicate a motor vehicle as a whole. Without implying any loss of generality thereby, the motor vehicle 1 is a sports car.

The motor vehicle 1 can be associated with an integral reference system defined by a triplet of Cartesian axes comprising a roll axis X, a pitch axis Y and a yaw axis Z.

The axis X coincides with a longitudinal axis of the motor vehicle 1; the axis Y is horizontal, with reference to the normal conditions of motor vehicle 1 use, and orthogonal to the axis X; the axis Z is orthogonal to both axes X, Y and is at least partially vertical to the ground on which the motor vehicle 1 rests.

In addition, in the remainder of this description, expressions such as front, in front of, rear, to the rear of, before, behind, and the like refer to a normal advancement direction A of the motor vehicle 1. Similarly, expressions such as upper, lower, high, low, and the like refer to the normal conditions of use of the motor vehicle 1.

The motor vehicle 1 comprises a front end 31 and a rear end 32 along the advancement direction A. The front end 31 and the rear end 32 are opposed to each other along the axis X.

The motor vehicle 1 also comprises a body 2 and a plurality of wheels, in particular a pair of front wheels R arranged at the front end 31 and a pair of rear wheels N arranged at the rear end 32, which rotate with respect to the body 2 about respective rotation axes.

The body 2 comprises, in turn, a chassis defining the structural framework of the motor vehicle 1 and a bodywork supported by the chassis and defining the external surfaces of the motor vehicle 1. According to a possible non-limiting embodiment, the chassis and bodywork are integrated with each other.

The body 2 also comprises a floor panel 3, which in particular defines the lower base of the motor vehicle 1. In particular, the floor panel 3 comprises a lower surface 3b adapted to face the ground on which the wheels rest during use of the motor vehicle 1.

The body 2 also comprises a pair of shell portions 4, preferably equal to each other, coupled to the floor panel 3 at the respective opposite side ends of the motor vehicle 1 along the axis Y.

The shell portions 4 define respective cabins 5, together with the floor panel 3, that are distinct from each other. Each cabin 5 is understood to be an environment overall adapted to accommodate a human driver in conditions suitable for driving the motor vehicle 1. Preferably, but not necessarily, each cabin 5 is configured to fully accommodate a respective human user of the motor vehicle 1. Therefore, the term "cabin" excludes spaces that are cramped and unsuitable to accommodate the driver with a posture typically suited to driving.

The floor panel 3 further comprises two shell portions 6 respectively coupled to the other shell portions 4 to form (at least in part) corresponding shells 7 that internally define the respective cabins 5.

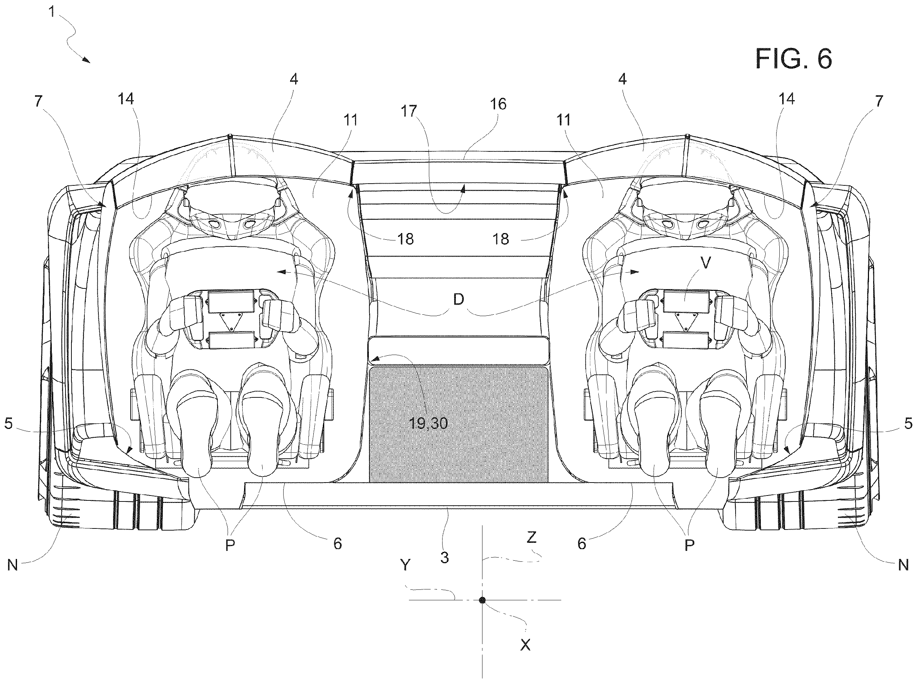

The cabins 5 preferably comprise one or more seats. Alternatively or in addition, both the cabins 5 comprise respective driving means or devices D to enable the driver to drive the motor vehicle 1. For example, each of the driving devices D comprises a steering wheel V and pedals P (for example, a brake pedal and an accelerator) having known functions that are not, therefore, described in further detail (Figure 6).

Preferably but not necessarily, when the driving device D in one of the cabins 5 is in use, the driving device D in the other cabin 5 is disabled for safety. This can be done automatically via a program loaded onto a control unit - not shown - of the motor vehicle 1 or via a key that can only enable one of the driving devices D, while the other remains disabled. In this way, the driver can choose to drive on the right or left side of the motor vehicle 1, simply by entering the desired cabin 5.

The shells 7 comprise respective walls configured to define and/or circumscribe the cabins 5, as well as making them separate and distinct. In detail, the walls of each of the shells 7 have no shared portions nor do they intersect with the walls of the other of the shells 7. Similarly, the shell portions 4 are separated from each other, that is, they have no shared parts nor do they intersect with each other.

Like the shell portions 4, moreover, the shells 7 are respectively located at the opposite side ends of the motor vehicle 1 according to the axis Y.

The motor vehicle 1 also comprises a portion 8 interposed between the two shell portions 4 along the axis Y and directly exposed to the outside air during use. In detail, the portion 8 separates the shell portions 4 from each other along the axis Y.

In more detail, the shells 7 comprise respective front heads 9 according to the advancement direction A, which specifically define the cabins 5, and respective rear tails 10 extending to the rear of the front heads 9. The rear tails 10 extend from the front heads 9 essentially continuously, that is, except for demarcation gaps with negligible longitudinal dimensions (e.g. less than 10 mm).

The rear tails 10 comprise respective cavities within them - not illustrated - conveniently separated along the axis X from the respective cabins 5. Specifically, these cavities are separated from the respective cabins 5 by corresponding internal finishing walls or panels 11 (Figure 6).

Preferably, but not necessarily, the rear tails 10 are permeable to air and/or porous, so that air can pass into the respective cavities through the rear tails 10.

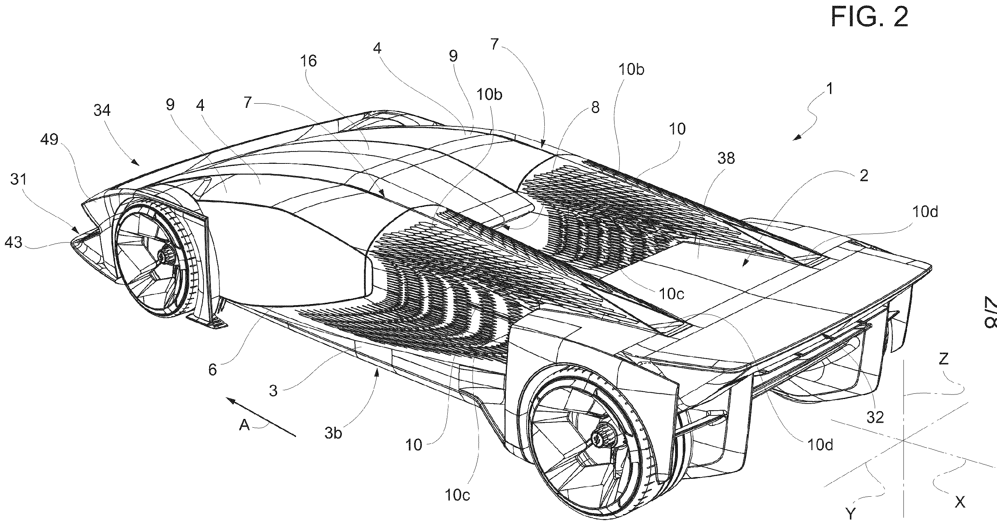

In particular, the rear tails 10 may be at least partly formed by a mosaic or a mesh 10b with interstices between the mosaic pieces or between the solid parts of the mesh, so that the interstices allow air to pass into the cavities through the corresponding rear tails 10. Alternatively or in addition, the rear tails 10 comprise one or more slit windows or louvers 10c that connect the cavities with the outside. Alternatively or in addition, the rear tails 10 have openings 10d arranged at their rear ends and facing towards the rear of the motor vehicle 1 to allow the outflow of air that has passed through the cavities towards the rear of the motor vehicle 1 (Figure 2).

In the embodiment illustrated, access to the cabins 5 is preferably permitted via doors or wings 12 forming part of the shell portions 4. The wings 12 are movable in relation to the corresponding shell portions 6.

More specifically, the wings 12 comprise at least a part of the respective upper outer surfaces of the shell portions 4 and are pivoted, in particular at the front, on the body 2 or more precisely on the floor panel 3 about axes H parallel to the axis Y, so that the wings 12 can be rotated about the axes H, in particular towards the front of the motor vehicle 1, to allow access to the respective cabins 5 from above (Figure 1).

By way of non-limiting example, certain areas of the shell portions 4 are at least partially transparent to allow visibility, for example frontal and lateral, of the exterior of the motor vehicle 1 from inside the cabins 5. Alternatively, the motor vehicle 1 is driven, for example, by means of a virtual reality visor worn by the driver and receiving visual information relating to the exterior of the motor vehicle 1 from cameras appropriately positioned at outward-facing regions of the body 2.

Each of the shell portions 4 (or at least one of them) preferably comprises at its respective top a dome 14 with a concavity facing the floor panel 3. The dome 14 specifically defines a roof of the corresponding cabin 5 (Figure 6).

In particular, the dome 14 has at least one transversal section, that is according to a plane orthogonal to the axis X, having the shape of an arc of an ellipse or a circumference in accordance with non-illustrated embodiments.

Alternatively or in addition, each of the shell portions 6 (or at least one of them) has an opposite concavity with respect to the dome 14 and is coupled with it to form the corresponding shell 7. Nevertheless, according to additional embodiments, the shell portion 6 could be flat.

In detail, the shell portion 6 therefore defines a sort of cradle or basin inwardly delimiting the lower area of the corresponding cabin 5. In particular, the shell portion 6 defines a floor of the corresponding cabin 5.

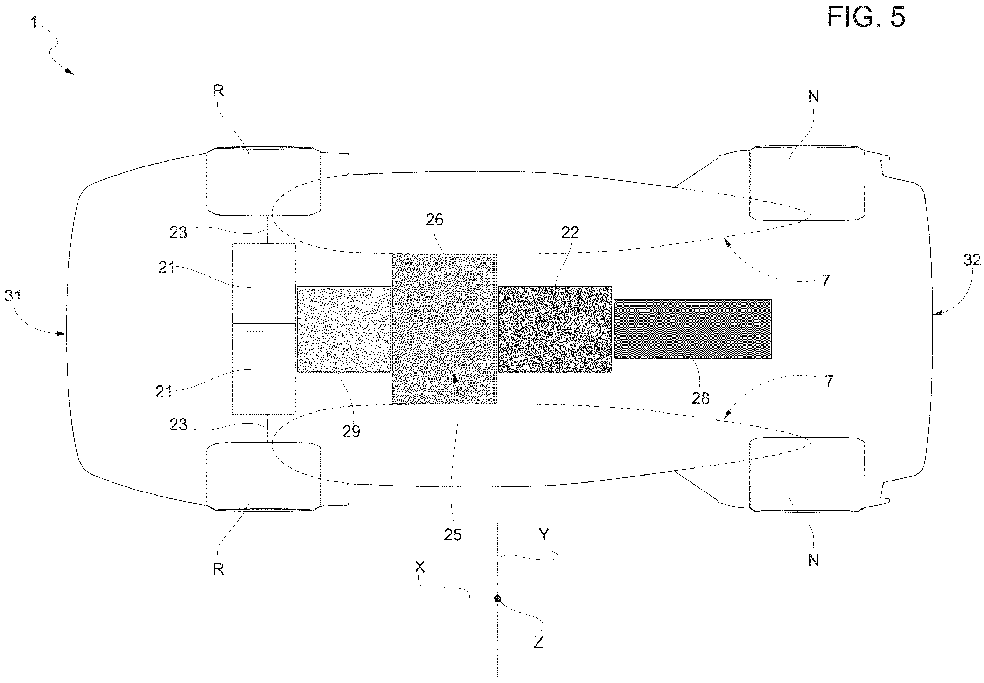

Overall, each shell 7 (or at least one of them) has a generally ogival or torpedo-like shape, that is, essentially cylindrical or ellipsoidal with at least one longitudinal end (along the axis X) that is tapered and the other, opposite longitudinal end preferably truncated or wedge-shaped, generally like that of a projectile or torpedo. In detail, the tapered longitudinal end is the rear end (Figure 5).

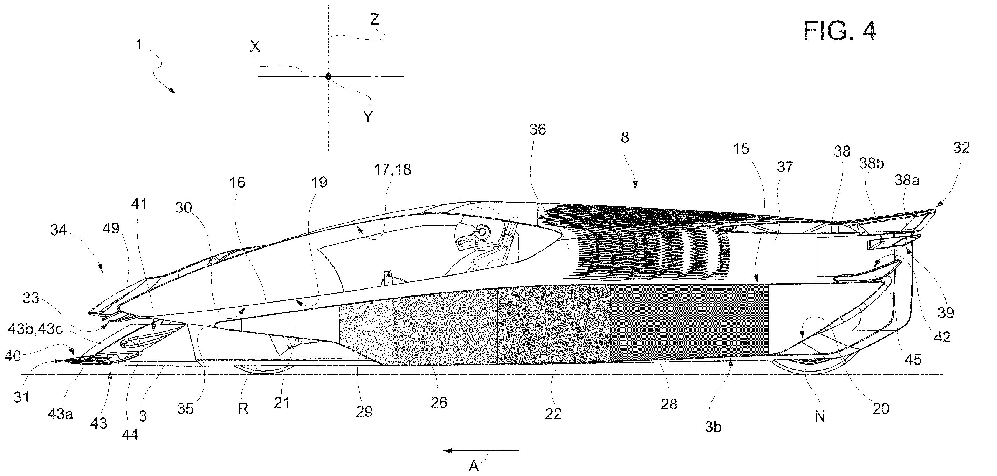

The portion 8 of the external volume between the shell portions 4 is preferably delimited below by an upper surface 15 of the floor panel 3. The upper surface 15 extends between the shells 7 or more precisely between the shell portions 6 along the axis Y (Figure 4).

The body 2 preferably comprises a bridge element 16 extending between the shell portions 4 along the axis Y so as to structurally connect the shell portions 4 to each other (Figure 2).

More preferably, the bridge element 16 is configured to make or establish visual communication, that is, so that the driver can see the inside of one of the cabins 5 from the inside of the other, and/or fluidic communication between the cabins 5.

Specifically, the bridge element 16 internally defines a pipe or duct 17 extending along the axis Y between two end openings 18 facing each other and respectively formed on the shell portions 4 to connect the duct 17 with both the cabins 5 (Figure 6).

The duct 17 and/or the corresponding end openings 18 are shaped so that the physical passage of the driver from one cabin 5 to the other is prevented through the duct 17. In other words, the duct 17 is unsuitable to accommodate the driver, so it does not define or form part of a cabin.

The end openings 18 are preferably closed by respective panels that are at least partially transparent, so that visual communication is established while fluidic communication is prevented.

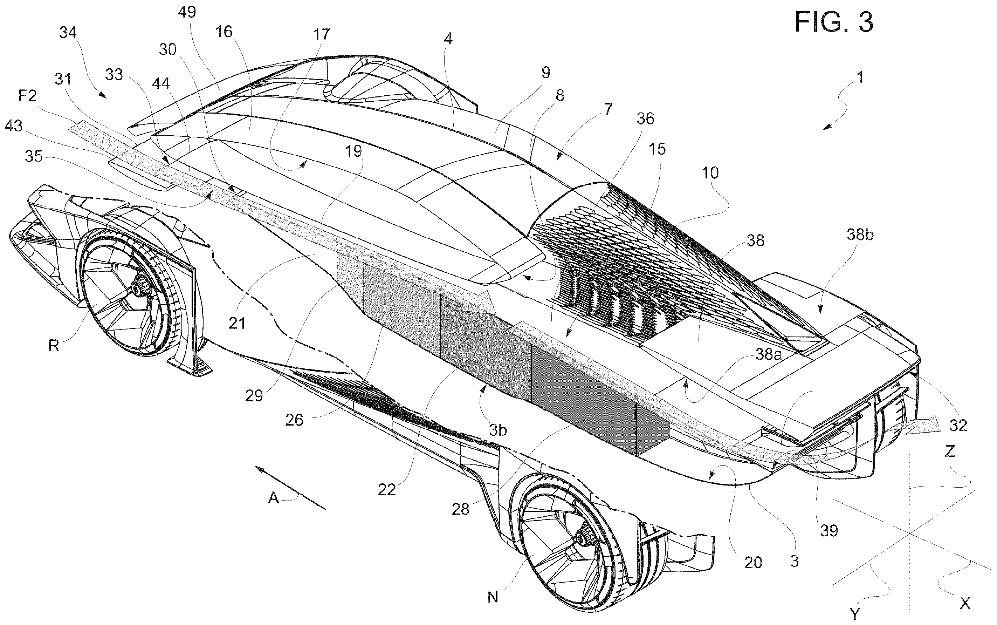

As illustrated in Figures 3 and 4, at least part of the portion 8 of the outer volume is defined by a duct portion 19 arranged vertically below the bridge element 16, or more precisely between the upper surface 15 and the bridge element 16, and more particularly between the shell portions 4 or the shells 7 along the axis Y.

Conveniently, the bridge element 16 has an upper external surface arranged in continuity or flush with at least part of the upper external surfaces of the shell portions 4.

In particular, the bridge element 16 terminates longitudinally and at the back at the rear ends of the heads 9, whereby a part of the portion 8 of the outer volume between the rear tails 10 according to the axis Y is, more specifically, completely exposed to the outside of the motor vehicle 1 towards the top.

On the other hand, as already described, the bridge element 16 covers the duct portion 19 from above.

As shown in Figure 1, the body 2 also comprises a front bumper 34. Specifically, the front bumper 34 comprises, in turn, two portions 43 and 49, which are spaced apart along the axis Z. More specifically, during normal use of the motor vehicle 1, the portion 43 is placed closer to the ground than the portion 49. Therefore, in the remainder of this description, the portion 43 will be referred to as the lower portion and the portion 49 will be referred to as the upper portion of the front bumper 34.

More specifically, the lower portion 43 is arranged at the front end 31; the upper portion 49 is spaced apart from the front end 31 along the axis X.

In detail, the upper portion 49 is also spaced apart from the shells 7 and, in particular, from the front heads 9. In addition, as illustrated in Figure 1, the upper portion 49 is inclined with respect to the axis Z.

Specifically, proceeding along the axis X in the direction oriented from the front end 31 to the rear end 32, the distance of the points of the upper portion 49 with respect to the lower surface 3b of the floor panel 3 according to the axis Z increases progressively.

The front bumper 34 formed by the lower and upper portions 43 and 49 preferably extends along the entire extension of the motor vehicle 1 according to the axis Y.

More specifically, the lower portion 43 comprises (Figure 1):
- a body 43a arranged transversely to the axis Y; and
- two upright elements 43b, 43c extending from the body 43a on the side facing away from the lower surface 3b of the floor panel 3.

The body 43a is adapted to be placed horizontally or essentially horizontally to the ground. Specifically, the body 43a is arranged orthogonally to the axis Z. In addition, considering a cross section of the body 43a on a plane orthogonal to the axis Y, the body 43a has the shape of a closed profile, in particular similar to an airfoil.

The upright elements 43b and 43c are spaced apart along the axis Y. In addition, the upright elements 43b and 43c extend below the bridge element 16.

Similarly to the upper portion 49, the upright elements 43b and 43c are inclined with respect to the axis Z. Specifically, proceeding along the axis X in the direction oriented from the front end 31 to the rear end 32, the distance of the points of the upright elements 43b and 43c with respect to the lower surface 3b of the floor panel 3 according to the axis Z increases progressively.

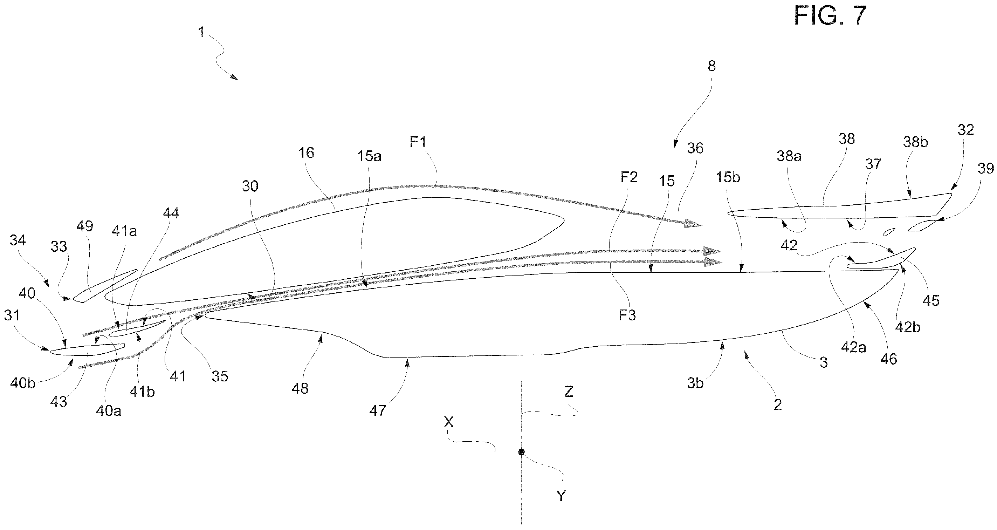

The body 2 also comprises a transversal element 44, which extends between the upright elements 43b and 43c along the axis Y. This transversal element 44 is interposed between the body 43a and the bridge element 16 along the axis Z (Figures 4 and 7).

Considering a cross section of the transversal element 44 on a plane orthogonal to the axis Y, the transversal element 44 has the shape of a closed profile, in particular similar to an airfoil. Specifically, the transversal element 44 defines a double aerodynamic profile wing with the body 43a.

The body 2 also comprises an additional bridge element 38, which structurally connects the shells 7 or shell portions 4 to each other by extending between them along the axis Y. Specifically, this bridge element 38 performs the function of a wing. The bridge element 38 is arranged at the rear tails 10.

In detail, the bridge element 38 is separate and distinct from the other bridge element 16. In particular, the bridge element 38 is spaced apart from the other bridge element 16 along the axis X.

More specifically, considering a cross section of the bridge element 38 according to a plane orthogonal to the axis Y, the bridge element 38 comprises a closed-profile shape.

In detail, still considering the cross section of the bridge element 38 on the plane orthogonal to the axis Y, the bridge element 38 comprises a lower surface 38a, which is adapted to be arranged on the side of the ground, and an upper surface 38b, which is adapted to be arranged on the side facing away from the ground. The bridge element 38 is adapted to be wetted by the flow at both the lower surface 38a and the upper surface 38b (Figures 4 and 7).

The body 2 also comprises a transversal element 45, which extends along the axis Y between shells 7. The transversal element 45 is arranged below the bridge element 38. Specifically, the transversal element 45 is interposed between the bridge element 38 and the upper surface 15 of the floor panel 3 along the axis Z. More specifically, the transversal element 45 is arranged below the bridge element 38 so as to be at least partially aligned with it according to the axis X (Figure 4).

The body 2 also preferably defines one or more compartments 20 between the shell portions 4 or shell portions 6 or shells 7 along the axis Y.

More precisely, the compartments 20 are at least partly or entirely delimited laterally (that is, along the axis Y) by the shell portions 6 or shells 7. In other words, one or more compartments 20 are arranged at the front of or behind the shell portions 6 or shells 7, so as not to be laterally delimited by them, while one or more additional compartments 20 are laterally delimited by the shell portions 6 or shells 7.

Alternatively or in addition, the compartments 20 are delimited at the top by the upper surface 15 and/or at the bottom by the lower surface 3b of the floor panel 3. In other words, the compartments 20 are formed within the floor panel 3 between the shells 7 or shell portions 4 or 6 along the axis Y.

The motor vehicle 1 also comprises a propulsion assembly for propelling the motor vehicle 1 itself, that is, for driving at least one of the pairs of wheels R, N in rotation, thereby causing the motor vehicle 1 to move forward along the advancement direction A.

The propulsion assembly comprises one or more motors or engines 21, 22, preferably housed in the compartments 20.

According to the preferred, non-limiting embodiment illustrated in Figures 3 and 4, the motors or engines 21, 22 comprise an electric motor-generator and an internal combustion engine, respectively, fuelled with fuel, in particular but not necessarily hydrogen, for example stored in the motor vehicle 1 in a liquid or gaseous state.

In detail, although clearly the configuration of the motors or engines 21, 22 could be reversed, the motor 21 is arranged to drive the pair of wheels R in rotation, while the engine 22 is arranged to drive the pair of wheels N in rotation.

In particular, the motor vehicle 1 comprises a transmission, itself comprising a gearbox 28, configured to transmit power output from the engine 22 to the pair of wheels N (in other cases, the pair of wheels R is connected to the engine 22 via the transmission). The gearbox 28 is preferably housed in one of the compartments 20, in detail the same one in which the engine 22 is housed.

The propulsion assembly preferably comprises a pair of electric motors 21, each arranged to drive a corresponding wheel of the pair of wheels R (or pair of wheels N, according to an alternative) in rotation (Figure 5).

The pair of electric motors 21 could be part of an electric axle 23 and be housed in one of the compartments 20, for example with a configuration of the electric motors aligned with each other along the axis Y. Alternatively, the electric motors of the pair could be integrated with the wheels R or N, that is, placed inside them, respectively.

In general, for powering the propulsion assembly, the motor vehicle 1 comprises at least one storage device 25 configured to store an energy source for propelling the vehicle 1.

In the embodiment illustrated in Figure 5, the storage device 25 comprises a tank 26, in this case adapted to contain hydrogen, for example in a liquid or gaseous state.

The storage device 25 is preferably arranged between the shell portions 4 or shells 7 along the axis Y.

More specifically, the storage device 25 comprises a structural portion (for example, the outer walls of the tank 26) attached at least indirectly to both the shell portions 4. In particular, the structural portion is particularly fixed at the shell portions 6.

In this way, the structural portion of the storage device 25 defines a beam that structurally connects the shell portions 4 or more generally the shells 7 to each other according to a direction transversal with respect to the axis X. More specifically, the beam extends between the shell portions 4 or between the shells 7 according to the axis Y.

In the embodiment illustrated in Figure 5, in addition to the storage device 25, the motor vehicle 1 comprises an electrical energy storage device 29, for example a battery pack, configured to supply the motors 21 with electrical energy. The electrical energy storage device 29 is preferably arranged between the shell portions 4 or between the shells 7 along the axis Y, in particular in one of the compartments 20, more particularly the one containing the motors 21.

One of the compartments 20 preferably houses, in particular between the shells 7 or the shell portions 4 according to the axis Y, a generator (not shown) of electrical energy using the Seebeck effect, that is, a thermoelectric generator.

Advantageously, the body 2 further comprises (Figure 7):
- an aerodynamic duct 30 extending along the axis X between the front end 31 and the rear end 32 and between the shell portions 4 and/or the shells 7 along the axis Y;
- a plurality of downforce wings 40, 41, 15, 42 arranged within the aerodynamic duct 30 and/or delimiting the aerodynamic duct 30.

"Downforce wing" means a surface configured to develop downforce by virtue of its interaction with the airflow flowing in contact with it. In addition, as is well known, "downforce" means a force or a component of a force directed vertically to the ground on which the motor vehicle 1 rests and in the direction oriented from top to bottom, that is, towards the ground.

As illustrated in Figure 7, the body 2 comprises:
- two downforce wings 40 and 41, which are closer to the front end 31 than to the rear end 32 along the axis X; and
- a downforce wing 15, which is defined by the upper surface 15 of the floor panel 3.

Specifically, the downforce wing 15 delimits the aerodynamic duct 30 below for a substantial part of its extension parallel to the axis X. Furthermore, in the illustrated embodiment, the downforce wing 15 is arranged downstream of the downforce wings 40 and 41 along the axis X considering the direction oriented from the front end 31 to the rear end 32.

In addition, the downforce wings 40 and 41 are arranged in succession along the axis X. More specifically, the downforce wings 40 and 41 at least partially overlap along the axis X, that is, they extend along a common section of the extension of the aerodynamic duct 30 along the axis X.

More specifically, the downforce wing 40 comprises a back 40a and a belly 40b, which are opposed to each other along the axis Z. The back 40a is adapted to be arranged facing away from the ground, while the belly 40b faces the ground. In the non-limiting embodiment illustrated, both the back 40a and the belly 40b have respective convex profiles (Figure 7).

Similarly, the downforce wing 41 comprises a back 41a and a belly 41b, which are opposed to each other along the axis Z. The back 41a is adapted to be arranged opposed to the ground, while the belly 41b faces the ground. In the non-limiting embodiment illustrated, the back 41a has a profile with its concavity facing upwards, that is, opposite the ground; the belly 41b, on the other hand, has a convex profile, particularly in relation to the ground.

The aerodynamic duct 30 also comprises the duct portion 19 (covered at the top by the bridge element 16).

Proceeding along the axis X in the direction oriented from the front end 31 to the rear end 32, the upper surface 15 of the floor panel 3 comprises a first stretch 15a, which is convex, and a second stretch 15b, which is planar or having a concavity facing upwards. The first stretch 15a preferably extends at the duct portion 19 along the axis X, while the second stretch 15b is arranged downstream of the duct portion 19 along the axis X.

In addition, as illustrated in Figures 4 and 7, the aerodynamic duct 30 comprises an opening 33 at the front end 31. In particular, this opening 33 is configured to allow outside air to enter the aerodynamic duct 30. Even more specifically, the opening 33 is defined between the lower portion 43 and the upper portion 49 of the front bumper 34 along the axis Z.

In detail, the downforce wings 40 and 41 are at least partially interposed between the opening 33 and the portion 19 along the axis X.

The aerodynamic duct 30 preferably also comprises an opening 35 formed on the floor panel 3 at the lower surface 3b and thus adapted to be facing, in use, towards the ground. In detail, the opening 35 is arranged downstream of the opening 33 along the axis X. In detail, the opening 35 is separate and distinct from the other opening 33.

The duct portion 19 is arranged downstream of the opening 33 along the axis X and extends, more specifically, from the opening 35 along the axis X.

Downstream of the duct portion 19, the aerodynamic duct 30 comprises a portion 36 directly facing the outside of the motor vehicle 1. Specifically, the portion 36 is uncovered at the top. In other words, the portion 36 is open outwards on the opposite side of the floor panel 3 along the axis Z. More specifically, the portion 36 is delimited below by the downforce wing 15.

In addition, downstream of the portion 36 uncovered at the top, the aerodynamic duct 30 comprises a duct portion 37 covered by the bridge element 38.

The aerodynamic duct 30 terminates with an opening 39 at the rear end 33, for example defined vertically between the bridge element 38 and the upper surface 15 of the floor panel.

Therefore, in detail, the opening 39 is arranged downstream of the duct portion 37.

As illustrated in Figure 7, the body 2 comprises an additional downforce wing 42 at the duct portion 37. Specifically, considering a cross section of the downforce wing 42 on a plane orthogonal to the axis Y, the downforce wing 42 has the shape of a closed profile.

More specifically, the downforce wing 42 comprises a back 42a and a belly 42b, which are opposed to each other along the axis Z. The back 42a is adapted to be facing away from the ground, while the belly 42b faces the floor panel 3. In the non-limiting embodiment illustrated, the back profile 42a has a concavity facing upwards, while the belly 42b is convex, particularly in relation to the ground.

The downforce wing 42 is, preferably, closer to the downforce wing 15 than to the bridge element 38 along the axis Z.

In addition, the downforce wings 40, 41, 15 and 42 are preferably fixed in relation to the rest of the body 2.

In detail, the downforce wing 40 is defined by the lower portion 43 of the front bumper 34, in particular the body 43a; the downforce wing 41 is defined by the transversal element 44; the downforce wing 42 is defined by the transversal element 45 (Figures 4 and 7).

In addition, as illustrated in Figure 7, proceeding from the front end 31 to the rear end 32 along the axis X, the extension of the cross section of the aerodynamic duct 30 orthogonally to the axis X follows a converging-diverging or essentially converging-diverging profile.

Specifically, in the illustrated non-limiting embodiment, the extension of the cross section of the aerodynamic duct 30 orthogonal to the axis X essentially decreases from the opening 33 to an intermediate point of the duct portion 19 along the axis X, and then progressively increases to the opening 39.

More specifically, the cross-section extension of the duct portion 19 orthogonal to the axis X follows a converging-diverging pattern (Figures 4 and 7).

In addition, as illustrated in Figure 7, the lower surface 3b comprises a region 46 shaped like a diffuser. Specifically, the region 46 is arranged on the side of the rear end 32.

The lower surface 3b also comprises a region 47, which constitutes the portion of the floor panel 3 adapted to be closest to the ground along the axis Z.

More specifically, proceeding along the axis X in the direction oriented from the front end 31 to the rear end 32, the distance between the points in the region 46 and the other region 47 along the axis Z increases progressively.

The lower surface 3b preferably also comprises a region 48 arranged on the opposite side of the region 46 with respect to the region 47 along the axis X.

Specifically, proceeding along the axis X in the direction oriented from the front end 31 to the rear end 32, the distance between the points in the region 48 and the other region 47 along the axis Z decreases progressively.

Ultimately, considering a section of the floor panel 3 on a plane orthogonal to the axis Y, the floor panel 3 with its upper surface 15 and lower surface 3b defines a closed profile as a whole.

In addition, the region 48 faces the downforce wings 40 and 41.

In summary, the floor panel 3 delimits and/or defines the aerodynamic duct 30 parallel to the axis Z (in particular, below) and along most of the extension of the aerodynamic duct 30 itself parallel to the axis X. In addition, the aerodynamic duct 30 on the opposite side to the floor panel 3 parallel to the axis Z is:
- delimited (above) along part of its extension parallel to the axis X (specifically, at the duct portions 19 and 38);
- open (above) and/or directly facing outwards (above) along another part of its extension parallel to the axis X (specifically, at the portion 36).

The operation of the motor vehicle 1 is described below.

In use, during forward motion of the motor vehicle 1, the airflow hitting it is distributed at least between (Figure 7):
- a portion of flow F1 flowing along the bridge element 16 along the axis X at a top of this bridge element 16 opposite the lower surface 3b;
- a portion of flow F2 entering the aerodynamic duct 30 through the opening 33;
- a portion of flow F3 entering the aerodynamic duct 30 through the opening 35.

Specifically, the portion of flow F1 flows in the direction oriented from the front end 31 to the rear end 32 until it reaches the portion 36.

The portion of flow F2 first flows along the downforce wing 40 and then along the downforce wing 41, before flowing into the duct portion 19 and reaching the portion 36.

The portion of flow F3 also flows along the duct portion 19 until it reaches the portion 36.

During the passage along the duct portion 19, the portions of flow F2 and F3 interact with the downforce wing 15.

The three portions of flow F1, F2 and F3 subsequently come together at the portion 36 and thus continue to flow through the duct portion 37 until they leave through the opening 39.

In particular, while crossing the duct portion 37, the airflow interacts with the downforce wing 42.

By virtue of the interactions of the airflow with the downforce wings 40, 41, 15 and 42, the motor vehicle 1 experiences greater downforce than it would in the absence of the duct 30. In addition, the duct 30, by virtue of the fluidic paths it defines, contributes to reducing the back pressures that would act on the downforce wings 40 and 41.

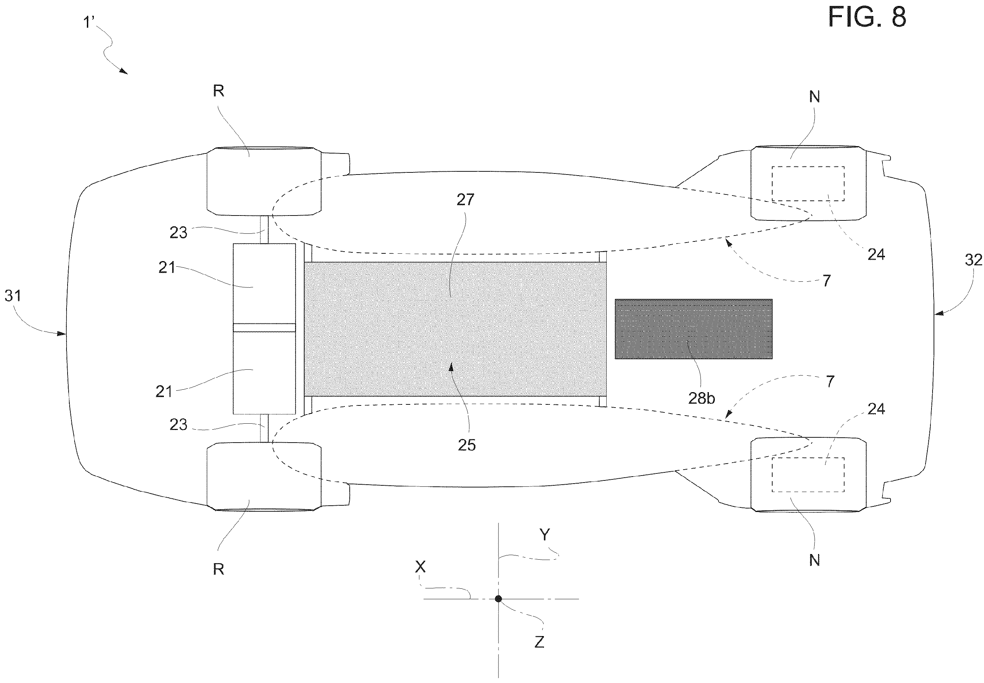

With reference to Figure 8, reference number 1' indicates a motor vehicle according to a second embodiment of the invention. The motor vehicle 1' is similar to the motor vehicle 1 and will be described below only as far as it differs from the latter; the same or equivalent parts of the motor vehicles 1; 1' will be designated, where possible, by the same reference numbers.

In the embodiment of Figure 8, the engine 22 is replaced by an additional pair of electric motors 24 integrated into the wheels N.

In the embodiment in Figure 8, moreover, although this is similarly applicable to the embodiment in Figure 5, one of the compartments 20 houses an inverter 28b to control the electric motors 21.

In addition, the storage device 25 comprises an electrical energy storage device 27, in particular a battery pack.

The advantages of the motor vehicle 1; 1' according to the invention are clear from the foregoing.

In particular, since the motor vehicle 1; 1' comprises the aerodynamic duct 30 extending between the shell portions 4 and the downforce wings 40, 41, 15, 42 arranged within it and/or defining it, the aerodynamic performance of the motor vehicle 1; 1' is improved compared to that of the known motor vehicles discussed in the introduction to this description. In fact, a portion of the flow that strikes the motor vehicle 1; 1' during forward motion is carried through the aerodynamic duct 30 and thus interacts with the downforce wings 40, 41, 15 and 42, increasing performance in terms of stability and road holding.

The motor vehicle 1; 1', moreover, has a revolutionary construction compared to known motor vehicles, in that it comprises the two distinct cabins 5 surrounded by the shells 7 spaced apart along the axis Y and preferably with an ogival shape.

In detail, the shape of the shells 7 with the aerodynamic duct 30 interposed between them along the axis Y also contributes to ensure high aerodynamic efficiency.

The motor vehicle 1; 1' can be driven either with the driver on the right side or with the driver on the left side of the motor vehicle 1; 1' itself.

Finally, it is clear that changes may be made to the motor vehicle 1; 1' according to the invention, and variations produced thereto, that, in any case, do not depart from the scope of protection defined by the claims.

In particular, contrary to the above, only one of the cabins 5 could be configured to accommodate a human driver, while the other of the two cabins 5 could perform a generic compartment function (for example, as a luggage compartment).

The extension of the cross section of the aerodynamic duct 30 orthogonally to the axis X could have a converging or substantially converging monotonic profile.

The body 2 could comprise only one of either the downforce wing 40 and the other downforce wing 41, or it could comprise several downforce wings 40 and/or multiple downforce wings 41. In addition, the downforce wings 40 and 41 could form a single body.

The body 2 could also comprise more downforce 42 wings.

## Claims

1. A motor vehicle (1; 1') comprising:
- a front end (31) and a rear end (32) opposed to each other according to an advancement direction (A) of said motor vehicle (1; 1'); and
- a body (2);
said body (2) comprising, in turn:
- a floor panel (3);
- a pair of shell portions (4) coupled to said floor panel (3) and spaced away from each other along a first pitch axis (Y) of said motor vehicle (1; 1');
said shell portions (4) defining respective compartments (5) with said floor panel (3); wherein at least one of said compartments (5) is a cabin configured to accommodate, in use, a user of said motor vehicle (1; 1');
said body (2) further comprising:
- an aerodynamic duct (30) extending between said shell portions (4) along said first axis (Y) and between said front end (31) and said rear end (32) along a second roll axis (X) of said motor vehicle (1; 1'); and
- at least one downforce wing (40, 41, 15, 42) that is arranged within said aerodynamic duct (30) and/or delimiting said aerodynamic duct (30).

2. The motor vehicle according to claim 1, wherein said compartments (5) are separate and distinct from each other and/or wherein each said compartment (5) is a cabin configured to fully accommodate, in use, a user of said motor vehicle (1; 1').

3. The motor vehicle according to claim 1 or 2, comprising:
- a first said downforce wing (40, 41), which is closer to said front end (31) than to said rear end (32) along said second axis (X); and
- a second said downforce wing (15), which is integrated into said floor panel (3).

4. The motor vehicle according to any one of the preceding claims, wherein said floor panel (3) delimits and/or defines said aerodynamic duct (30) parallel to a third axis (Z) and along the majority of the extension of said aerodynamic duct (30) parallel to said second axis (X); said third axis (Z) being vertical to the ground on which said motor vehicle (1; 1') rests, in use.
wherein said aerodynamic duct (30), on the opposite side of said floor panel (3) parallel to said third axis (Z) is:
- delimited along part of its extension parallel to said second axis (X); and
- open and/or directly facing outwards along another part of its extension parallel to said second axis (X).

5. The motor vehicle according to any of the previous claims, wherein said body (2) comprises a bridge element (16) extending between said shell portions (4) along said first axis (Y), so as to structurally connect said shell portions (4) to each other, and configured to establish a visual and/or fluidic communication between said compartments (5);
said aerodynamic duct (30) comprising a first portion (19), which extends between said bridge element (16) and said floor panel (3) along a third axis (Z) that is vertical to the ground on which said motor vehicle (1; 1') rests, in use.

6. The motor vehicle according to claim 5 when dependent on claim 3, wherein said aerodynamic duct (30) comprises a first opening (33) at said front end (31);
said first downforce wing (40, 41) being at least in part interposed between said first opening (33) and said first portion (19) along said second axis (X).

7. The motor vehicle according to claim 6, wherein said aerodynamic duct (30) comprises a second opening (35) at said floor panel (3); said second opening (35) being adapted to be facing, in use, towards the ground on which said motor vehicle (1; 1') rests;
said second opening (35) being arranged downstream of said first opening (33) along said second axis (X) considering the direction oriented from said front end (31) to said rear end (32);
said first portion (19) extending downstream of said second opening (35) along said second axis (X) in the direction oriented from said front end (31) to said rear end (32).

8. The motor vehicle according to claim 7, wherein said second opening (35) is separate and distinct from said first opening (33).

9. The motor vehicle according to any one of claims 5 to 8, wherein said aerodynamic duct (30) comprises a second portion (36) extending downstream of said first portion (19) along said second axis (X) considering the direction oriented from said front end (31) to said rear end (32);
wherein said second portion (36) is directly facing towards the exterior of said motor vehicle (1; 1').

10. The motor vehicle according to any one of claims 5 to 9, comprising a further bridge element (38) extending between said shell portions (4) along said first axis (Y); said further bridge element (38) being closer to said rear end (32) than to said front end (31) along said second axis (X);
said aerodynamic duct (30) comprising a third portion (37), which extends between said further bridge element (38) and said floor panel (3) along said third axis (Z).

11. The motor vehicle according to claim 10, wherein said additional bridge element (38) is distinct from said bridge element (16) and is spaced apart from said bridge element (16) along said second axis (X).

12. The motor vehicle according to claim 10 or 11, when dependent on claim 9, wherein said third portion (37) is arranged downstream of said second portion (36) along said second axis (X) considering the direction oriented from said front end (31) to said rear end (32).

13. The motor vehicle according to any of claims 10 to 12, comprising a third said downforce wing (42), which is arranged at said third portion (37).

14. The motor vehicle according to any of claims 10 to 13, wherein said aerodynamic duct (30) comprises a third opening (39) at said rear end (32);
wherein said third portion (37) extends to said third opening (39).

15. The motor vehicle according to any one of the preceding claims, wherein proceeding from said front end (31) to said rear end (32) along said second axis (X), the extension of the cross section of said aerodynamic duct (30) orthogonally to said second axis (X) follows a converging-diverging or substantially converging trend.
